# EUROPEAN PATENT APPLICATION

(11) **EP 1 615 037 A1**
(43) Date of publication of application: **11.01.2006**
(21) Application number: 04015851.1
(22) Date of filing: 06.07.2004
(51) Int. Cl.: G01N 35/10, G01N 35/04

(54) **An apparatus for liquid handling with multiple transfer tools**

(71) Applicant: Roche Diagnostics GmbH, 68305 Mannheim (DE); F. HOFFMANN-LA ROCHE AG, 4070 Basel (CH)
(72) Inventor: Bachmann, Hans-Rudolf, 6343 Rotkreuz (CH); Baumann, Renato, 6312 Steinhausen (CH); Kerbler, Heinz, 6043 Adlingenswil (CH); Bernet, Roland, 6405 Immensee (CH); Emmenegger, Pius, 6060 Sarnen (CH); Schorno, Reto, 6043 Adligenswil (CH)
(74) Representative: Knauer, Martin

(57) **Abstract**

A new apparatus is disclosed that provides higher throughput for handling liquids. It contains at least two transfer arms, at least one of them bearing at least two transfer heads.

## Description

The present invention is directed to an apparatus for handling multiple liquid samples and methods for handling multiple liquid samples. The invention can be used particularly advantageous in the field of analytics, for example in health care.

### Background

Apparatus for conducting multi-step analytical processes have been known. In EP 1 032 839 there is disclosed an instrument providing handling units for different handling steps on a joint working area. However, future laboratories will have a need to employ high throughput instruments, i.e. instruments which can handle analysis of many samples in parallel. A further instrument is disclosed in EP 990 906. That discloses an apparatus for conducting a multi-step analytical process comprising an apparatus for isolating of nucleic acids from a sample, and another apparatus for amplifying and determining those nucleic acids. Those apparatus are linked by a transport module which carries the purified nucleic acids from an output position of the first apparatus to an input position of the second apparatus. Those apparatus are useful for handling vessels in serial manner.

Therefore, there was a particular need for instruments, which allow higher throughput analyses.

### Summary of the invention

This object is solved by the present invention.

A first subject of this invention is an instrument for handling liquids comprising a first transfer arm to be moved on a first path in a first horizontal direction and a second transfer arm to be moved independently but in coordinated manner on a second path in a second horizontal direction., Said first and second transfer arms bearing at least one transfer head, having at least one function selected from the group consisting of pipetting and gripping, characterized in that one of said first and second transfer arm comprises at least two transfer heads, the first of said transfer heads to be moved on a first path in a first horizontal and vertical direction and the second transfer head to be moved independently, but in co-ordinated manner on a second path in a second horizontal and vertical direction.

Another subject of the invention is a method for handling liquids contained in vessels in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- picking up said first vessel containing a first liquid using a gripper of said first transfer head and said second vessel containing a second liquid using a gripper of said second transfer head
- transferring said first vessel to a first position on a first path of said first transfer head and said second vessel to a second position on a second path of said second transfer head.

Another subject of the invention is a method for handling liquids in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- dispensing a first liquid into said first vessel using a pipettor of said first transfer head and a second liquid into said second vessel using a pipettor of said second transfer head

Still another subject of the invention is a method for handling liquids in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- aspirating a first liquid from said first vessel using a pipettor of said first transfer head and a second liquid from said second vessel using a pipettor of said second transfer head.

One possible advantage of present invention is that it eases multiple parallel analyses. The construction makes possible fully automated instruments, not requiring manual intervention during the process of determination of an analyte in a sample in a parallel analyses.

### Brief description of the Drawings

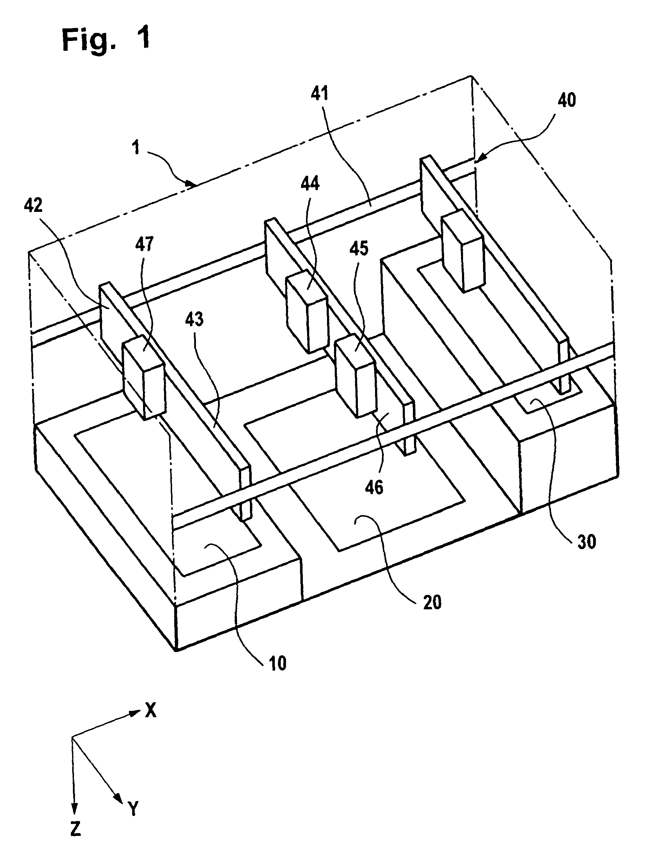

In Figure 1, the general construction of an instrument according to the invention is schematically shown.

### Detailed description of the invention

A multi-step process is a process having two or more steps. Those steps can be performed in parallel or in a series. In the first case, a number of steps, same or different, are started at the same time. This is called the parallel mode. In the second case, the steps are performed in a series each at a different starting time. This is called the serial mode. In the preferred case, each series of steps is initiated at a different starting time. A very advantageous use of the present invention is found when serial and parallel mode of conducting steps is mixed. This is when performing several processes in parallel, each being composed of a series of subsequently performed steps. Those series of steps can be started at the same time or subsequently. Most preferred multistep processes involve conducting the multistep procedure in parallel batches, for instance four series of processes are started at the same time, in parallel. After this first batch has undergone the first step and proceeds to the second step, the second batch of parallel processes is started, in the first step.

Analytical processes often require multiple steps during analysis of a sample. Therefore, analytical processes are the particular focus of use of the apparatus of the present invention. An example of such method is the analysis of a sample for a component, i.e. a chemical entity contained in the sample. Samples containing a large number of different components of interest are samples of natural origin. The samples can be solid or liquid. Examples of particular interest are body fluids or liquids derived therefrom. A particularly preferred liquid is blood or its derivatives, like serum and plasma. Further preferred liquids are urine and sputum. A solid sample is swab and tissue.

Analytical processes derive a result from analysis of a sample. Thus, the starting point of the analysis is a given amount of sample. The result mostly is provided as an electronic signal, shown on a display, for instance on a computer screen. While some analyses do not require chemical or mechanical treatment of the sample, most analyses include several steps of treating the sample, including releasing the components to be detected from their micro-environment in the sample, for example release of the component from cells they are associated with. Some analyses also require enrichment of the component to be detected. In another advantageous mode, preferred when other components of the sample interfere with the analysis, the component of interest is isolated and purified from the original sample and thereafter subjected to detection. Some steps of the procedure, like washing to remove impurities, may be repeated once or more times for a better result. The result typically is information given to the person doing the analysis, i.e. on a display, showing the fact of presence or the amount present of one or more components of the sample.

Typical analytical processes are clinical, immunological and molecular diagnostic analyses. Each of them requires multiple operational steps. Those steps are preferably selected from the group of adding or removing liquids or solids to the sample or any subsequently produced solids and liquids. Advantageously, those different steps for a number of reasons are done at different locations on the instrument. Those steps may therefore necessitate the transport of the sample or any derivatives thereof from one location to another on the instrument. In view of the fact that it is beneficial to do similar steps at one site and transport the sample as soon as new tools are needed, the steps are grouped together. In immunology, the procedure may comprise sample preparation, separation and detection. In nucleic acid analysis, the steps are preferably selected from the group consisting of sample preparation, amplification and detection. Each of these steps may be composed of complex procedures.

Steps typically used in analyses are selected from the group of aspirating sample or / and reagents, dispensing sample or / and reagents, mixing sample or / and reagents, heating samples or/ and reagents, picking up or / and releasing disposables or / and sample containers, discharging liquids or / and solids, irradiating items, detecting electromagnetic radiation and moving items.

The apparatus of the invention can have any dimensions fitting into a laboratory, preferably has a length of between 1.0 and 5 meters, more preferably between 2 and 4 meters, and most preferably between 2.5 and 3.5 meters and a weight of between 80 and 2000, preferably between 150 and 1200 kg. Preferably, the apparatus has a width of at least 0.5, preferably between 0.8 and 1.5 meters and a height of at least 0.8, preferably between 1.0 and 2.5 meters. Furthermore, it preferably contains storage of all consumables needed for the analysis to be performed in the multistep analysis and one or more waste containers for trash.

The apparatus in a particularly useful embodiment has a transfer module comprising at least two transfer arms and at least one working area for each transfer arm. Those transfer arms are moveably mounted on said apparatus. A transfer arm comprises at least one transfer head. The transfer module of the present invention is a part of the apparatus which is designed to handle liquids or / and transfer items from one position on the apparatus to another position on the apparatus. Items to be transferred include solids, liquids and disposables. Therefore, the transfer head preferably contains a mechanical unit for transporting items from a first working area to a second working area or, preferably, from a first location in a working area to a second location of said same working area. The functions of the tools contained within the transfer module, are selected from receiving, maintaining, moving and releasing items.

Preferred liquids are samples to be analyzed, liquids derived from the sample, liquids that contain the analyte to be determined during the process, and suspensions of solids, including solids to which said analyte has been bound, as well as reagents. Those liquids are preferably contained within disposables, for instance vessels or pipette tips. A mechanical unit used to transfer a liquid in a syringe is called pipettor in the following

Mechanical units to transport disposables usually comprise picking up the disposable and releasing the disposable. This mechanical unit is called gripper in the following. A gripper can in addition and preferably have the additional function of pipetting. Therefore, a gripper is preferably a unit that can either pick up a vessel, a cap or a pipette tip, or can pick up a pipette tip and aspirate and dispense liquids through the tip. A particular gripper is a socket for picking up pipette tips.

Disposables include vessels, pipette tips, caps or reagent bottles. Vessels and pipette tips are known to be useful tools for handling liquids, for example in pipetting apparatus. Both, vessels and pipette tips can be used to transport, to maintain or to mix liquids. Vessels are containers for maintaining liquids or solids, usually made of plastics. Pipette tips are devices having at least two openings, one to enter a liquid, and another to withdraw fluid through the device, such that the liquid is drawn into the device by applying a vacuum. By lowering the pressure in the device, liquid is released from the device. Pipette tips are used in the form of disposable plastics, particularly if the liquid to be aspirated and dispensed should not contaminate samples treated subsequently using the same apparatus. Preferentially, after usage, pipette tips are discarded by releasing them from a socket through which they were attached to the vacuum pumping device. For handling reagents from a reagent container, reusable pipettes, syringes or needles can be used. Those pipettes are preferentially made from metal and may be washed with a washing liquid prior to subsequent use with other reagents. Pipetting apparatus are generally known in the art. Usually they contain a pump to apply a vacuum in a controlled manner. The pump can be present in the transfer head or can be connected to the pipette via a plastic tubing or dedicated sealed channel

The transfer module according to the invention contains at least a first transfer arm and a second transfer arm. Preferably, it contains at least another transfer arm, a third transfer arm. Each transfer arm comprises at least one transfer head. Each of said transfer heads has a handling function selected from the group consisting of pipetting, transferring and gripping. Pipetting is a function to either aspirate a liquid or dispense a liquid or aspirate and dispense a liquid. Transferring is a function to move an item from one location or position on the working area to another location or position on the working area. Gripping (also called picking -up) is a function to receive an item, preferably a vessel or a pipette tip. Gripping also includes releasing. The transfer of a liquid from a vessel may thus include gripping a pipette tip from a reservoir to a socket on a transfer head and aspirating the desired volume of the liquid, releasing the liquid from the pipette tip and releasing the pipette tip into a waste container.

The handling can be made in any manner, generally by pipetting, transferring or / and gripping the item. Preferably, the transfer module (40) contains one or more rails (41), on which one or more transfer arms (42) are mounted for horizontal (X) movement of the transfer arm, providing access to one or more working areas. If the transfer module contains more than one rail, there may be no need for all transfer arms to be mounted on the same rail. More preferably, the transfer module contains a rail on which at least two transfer arms are mounted. The arms can move in the instrument driven by a motor, via a belt or a screw-type connector. Generally, a transfer arm bears at least one transfer head for the handling of items within a working area. Further preferred, the transfer arm contains a rail on which the transfer head or transfer heads are mounted such that they can be moved along the rail, preferably in horizontal (Y) direction. Preferably, each transfer head contains different tools, for example one or more gripper that are preferably moveable independently in Z-direction. Those transfer heads may also include a syringe for aspirating/dispensing of reagents or washing fluid, a socket for attaching a disposable pipette tip and/or a gripper for picking up vessels or other disposables or devices, like caps. Most preferred, each transfer head on the second transfer arm contains 2 or more grippers, more preferably sockets for picking up a pipette tip or a vessel, and one or more syringe for dispensing reagents or wash liquids. The transfer heads can be moved in any appropriate manner; preferably, they are driven by a plastic or metal belt drive connected to an electric engine. The transfer can include all three dimensions, X (horizontal, length), Y (horizontal, width) and Z (vertical, height, up and down), see figure 1.

In a preferred embodiment, the transfer module comprises at least two transfer arms, one of them having two transfer heads, each head being equipped with a gripper for picking up and transferring a vessel or for attaching a pipette tip and a syringe for dispensing reagents. These transfer arms are designed to be moveable along a common rail (41), the movement paths of the transfer arms allowing an overlap. This overlap is advantageous in order to operate the instrument such that a series of handling steps can be performed subsequently during the analytical process. The overlap is the area which is accessible to transfer heads on both transfer arms. For instance, the apparatus according to the present invention can with a transfer head on a first transfer arm aspirate liquids from vessels, located in an area to which only the transfer head on the first transfer arm has access, transport said liquids to locations to which both the transfer head of the first transfer arm and the first or second transfer head on the second transfer arm have access and dispense said liquids into vessels at said locations. Most preferably, the first and the second transfer head of said second transfer arm have access to said location. At said location, any desired reagents can be added. Mixing can be effected by sipping and spitting the liquid in the vessel(s) through the pipette tip(s). Thereafter, the resulting liquids can either be aspirated using pipette tips attached to sockets on the first and second transfer heads on the second transfer arm or the vessels containing the liquids can be gripped using grippers of the first and second transfer heads on said first and second transfer arms and the vessels will be transported to any desired locations to which the first and second transfer heads on said second transfer arm has access. In this way, the transfer heads can work at different stages of the analytical process, involving operations on different working areas, thus enhancing the throughput of the apparatus.

In a preferred embodiment, each transfer head on the second transfer arm has at least two grippers and at least one pipettor, which can be actuated independently in Z-direction.

In the present invention, there are preferably three transfer arms mounted on a common transfer rail, each of the transfer arms having an overlap in its movement paths with at least one of the other transfer arms. Each transfer arm contains at least one transfer head.

A working area according to the present invention is a part of the apparatus which comprises tools adapted to keep the items to be subject to analysis and any means needed for the analysis, preferably providing containers for an analytical process. Preferably, a working area has positions for input and output of items, like liquids and disposables. The working area can be accessed by tools on the transfer arms, like transfer heads. A working area further comprises one or more locations on which the sample to be analyzed or liquids derived therefrom is handled. Those locations preferably have means for containing vessels for containing the sample and/or the liquids derived therefrom. Suitable means are containers having a form for safely receiving vessels or other disposables at predefined positions which are accessible to the transfer head, also called racks. Furthermore, it can contain reagents to be used in an analytical process, which may also be contained in containers. Racks may be moveable between different stations on the same or different working areas, transferred by tools of the transfer head or independently.

In a preferred embodiment of the present invention, a first working area (10) is designed to accommodate the samples to be analyzed and bring it into a form ready to be analyzed. Such working area will in the following be called "sample receiving working area". Preferably, it contains an area for accommodating reagents, which is called "reagent input area", an area for input of samples to be analyzed, called "sample input area" and an area containing disposables called "disposable input area". Furthermore, the working area comprises an area which is accessible to the transfer head. This area is called "working area". All reagents, samples and disposables are provided in the sample receiving working area manifold, particularly, there is sufficient supply of disposables to receive the intended number of aliquots of samples to be analyzed, including controls. Generally, samples and controls are provided in primary containers in an amount sufficient to allow as many analyses as intended. In this working area, the mechanical and chemical means for inserting the reagents, keeping the reagents in a defined status, if desired, i.e. at the desired temperature, or keeping any solid particles in a liquid in suspension, inserting containers, for instance racks, containing the samples to be analyzed, storing the required number of disposable vessels and pipette tips, and displaying the items to be handled on the working area are provided. In an exemplary process conducted on the sample receiving working area, reagents, samples and disposables are introduced into the working area at defined positions. In a first step, a disposable reaction vessel is transported from the disposable storage area to a working position on the working area. This can be done by any means, for example a mechanical elevator for transporting the disposable vessel from the storage to the working area. In a first handling step, an aliquot of the sample is added to the vessel at said working position. If needed or desired, any reagents can be added to the disposable vessel either prior to, concomitantly therewith or subsequently thereto. The handling steps, i.e. aspirating and dispensing of the fluids, according to the present invention, is made by a transfer head mounted to the transfer module as described above.

A second preferred working area is designed to isolate components of the sample from the remaining liquid and any reagents, preferably for separating an analyte from a sample contained in a container, i.e. a vessel. Such working area will in the following be called "sample preparation working area". This working area also displays a working area, which is accessible to a transfer head of the transfer module positions, on which said handling steps are performed. Furthermore, this working area may have reagent input areas. In a typical and preferred embodiment, a liquid will be entered into the sample preparation working area by transferring a vessel containing said fluid from the output position on the sample receiving working area into a sample input position of the sample preparation working area or by dispensing said fluid into a vessel located at said sample input position. Possible handling steps on the sample preparation working area include maintaining the fluid at a particular temperature, for example, for releasing any components to be analyzed from cellular components of the sample, adding reagents to the fluid, mixing the fluid with reagents under conditions for binding the component to the solid, separating any solid components of the fluid from the remaining liquid or vice versa, washing any solids to which components of the sample have been bound, detaching components from solids to which they were bound and removing parts or all of the fluid contained in a vessel. Such steps can be performed in any order and repeatedly, if desired, to isolate the components from the liquid. In the preferred case, the result of the process performed on the sample preparation working area is a liquid containing the analyte or a compound derived from said analyte or a compound indicative of the presence of said analyte in the sample. This fluid is preferably contained in a vessel located in a sample output position.

In a very preferred embodiment, the sample preparation working area is designed for isolation of nucleic acids from a sample using binding the nucleic acids to a solid and detaching them after removal of the surrounding liquid. In this case, the liquid as received from the sample receiving working area contains reagents for lysing cells, i.e. viruses, and glass magnetic particles as well as reagents assisting in binding of nucleic acids to glass surfaces, i.e. chaotropic salts. The vessels containing this mixture are transferred from the sample receiving unit using a first transfer head which is positioned to handle the original sample, the necessary reagents and the disposables to input positions on the sample preparation working area that are also accessible to the transfer heads of the second transfer arm. The sample input position is kept at elevated temperature, preferably at 37°C to allow lysis of the cellular components. Then, each mixture is aspirated by a pipette tip mounted on the first and second transfer head of the second transfer arm and dispensed into a vessel being kept at another temperature, i.e. 80°C, at a separation position, respectively. In this position, the magnetic glass particles are maintained by magnets within the vessel, while the supernatant containing other components of the sample and the reagents can be aspirated and discarded by said first and second transfer head. In this position, the magnetic particles retained in the vessel are washed, whereby the nucleic acids are retained bound on the magnetic particles. Any wash fluid is discarded by aspirating and dispensing using the transfer head. In the last step, reagents are added to the magnetic beads in the vessels to which the nucleic acids are bound, to detach the nucleic acid from the magnetic particles. The solutions containing the purified nucleic acids are separated from the magnetic particles by aspiration into pipette tips and dispensing into fresh vessels which are located at designated output locations.

Reagents that are advantageously and preferably stored at the sample preparation working area are washing liquid and elution reagent, most preferably already containing reagents for subsequent amplification and/or detection of the components, i.e. the nucleic acids.

In a preferred embodiment of the invention, after the first and second transfer head have completed the step required, the transfer heads are used to transfer the liquids to an output area which is accessible to the first and second transfer head. At this location, there may be containers to receive the liquid resulting, preferably contained in vessels. This output position may receive the resulting liquids from several subsequent runs of the procedure performed by the first and second transfer head.

A third preferred working area in this embodiment may be a detection working area. Such working area contains tools for determining electromagnetic signals from a liquid. In a specific embodiment of an apparatus for detecting nucleic acids, the third working area is an amplification and detection working area. The transfer of the liquid from an output position of the sample preparation working area to an input position on the amplification detection working area may be done by a transfer head on a third transfer arm, which has an overlapping movement path with the second transfer arm.

This working area may be subdivided into two working areas, for example if amplification and detection are to be performed in subsequent steps. In the preferred case, in which amplification and detection are done in a so-called homogenous manner, in which no reagents need to be added between the amplification and detection step, one working area is sufficient.

In a preferred embodiment, the amplification detection working area contains at least one thermocycling position per liquid to be heated in one run. Thermocycles are used to bring a mixture of nucleic acids and amplification reactions to temperatures in a cyclic manner, such that the nucleic acids or parts thereof are amplified. The particularly preferred method for doing such amplification is the Polymerase Chain Reaction, as disclosed in EP 200 362 and EP 201 184. Thermocycling is preferentially done in a computer controlled manner. Therefore, the amplification detection working area further comprises computer means to control the temperature adjustment process. Such apparatus is disclosed in EP 236069.

The amplification detection working area may further contain containers for receiving liquid and solid waste.

Any detection working area or the amplification detection working area will further contain means to determine or monitor any properties of the fluid which are dependent upon the presence or the amount of analyte present in the original sample. Preferably, detection working areas contain photometer or fluorometer detection instruments. In order to determine the photometric or fluorometric properties of the liquid, the liquid may either be subjected to the detection during amplification, even when the liquid is still in the position used for amplification, or may be transferred to a position in the detection working area which is equipped with appropriate detection means, for example light irradiating and light receiving units. Such amplification detection working area is disclosed in EP 953379.

The apparatus of the present invention is preferably designed to conduct the multi-step analytical process for between 4 and 96, more preferable between 8 and 24, samples in an essentially parallel manner. More preferable, the analysis is done such that each sample is treated in a separate vessel. This has particular advantages for multi-step analytical processes, as needed in fully automated nucleic acid detection processes comprising sample preparation, amplification and detection on one instrument. Such multi-step analytical processes make attractive the use of different working areas, each having different functions.

The apparatus according to the invention contains two or more, preferably three or more working areas, most preferably 3 working areas. Those working areas can be located in relation to the transfer heads at different distances. For instance the working areas may be located on different heights. Furthermore, the items located on the working area, for instance racks, vessels, pipette tips and others, may be located at different distances from the transfer heads. It may readily be understood that different items may require different mechanisms and thus height of the handling position. Therefore, the transfer heads may be moveable also in a third direction (Z-axis, up and down). Operating such apparatus is accomplished in a convenient manner according to the invention.

In figure 1 there is schematically shown a transfer module 40 with a transfer head 44 mounted on a transfer arm (42) movable on rails 41 and 43. Furthermore there is shown a second transfer arm (46) bearing two transfer heads (47 and 48). A third transfer head is not shown, but omitted to maintain easier visibility. The transfer heads are moveable in the three dimensions X, Y, and Z. Each head can access a different working areas (10, 20 and 30), each having a different dimension, i.e. height and length.

Another subject of the invention is a method for handling liquids contained in vessels in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm,
- picking up said first vessel containing a first liquid using a gripper of said first transfer head and said second vessel containing a second liquid using a gripper of said second transfer head
- transferring said first vessel to a first position on a first path of said first transfer head and said second vessel to a second position on a second path of said second transfer head.

The method according to the invention is preferably performed on an instrument, i.e. in an automated manner. It is based on the idea to use at least two transfer arms, one of them comprising at least two transfer heads as outlined above. The working areas of the two transfer arms are not identical, but different, and they have an overlap to which both the first and the second transfer arm have access. The overlap has the function to provide a location where items, preferably liquids in vessels, from the first working area can be positioned using the first transfer arm, so that the tools on the heads on the second transfer arm can handle the item, i.e. the liquid. From time to time, liquids may require time consuming process and handling steps to be performed on the working area to be covered by the second transfer arm. It has shown to be disadvantageous to delay the whole process until the steps to be performed by the transfer head on the second transfer arm are finalized. The invention now provides the possibility to enhance throughput of the instrument by using at least two transfer heads on the second transfer arm. Preferably, the handling steps performed by the heads on the second transfer arm are performed in parallel. This has not been trivial, though the control algorithm of the motions has to be done in a way to avoid collisions of the transfer heads and transfer arms.

The control of the process is conveniently done using a computer and a program loaded thereon. The computer has an interface to the user, i.e. to enter data required to start the process, to identify the samples and follow their paths through the instrument and direct the various mechanical units regarding their action and positioning. Particularly, routines are available to determine the liquid level of the sample within vessels (for instance via differences in electric capacity of the pipette tip versus the vessel) or to measure volumes to be dispensed via pressure curves (a drop in pressure may indicate that the liquid has been released intendedly or through a leak from the pipette tip). Furthermore, the program for moving the heads takes into account that the paths on which the heads move do not meet at a given time. This can be done by using handling positions that are far away enough to provide the opportunity of free access and handling by two transfer heads at the same time. Programs are available from robotics that can be used to teach the transfer heads' later movement.

In one embodiment, the liquids to be handled are placed on the common working area in vessels. This is preferably done by transferring the vessels with the liquids to dedicated positions. Those positions are accessible for the transfer tool of the transfer head of the first transfer arm, and to at least one of the transfer heads of the second transfer arm, each. Preferably, one position is accessible to a first transfer head of the second transfer arm, and the second position is accessible to a second transfer head of the second transfer arm. The transfer heads can then independently handle the liquids on the second working area.

Those handling steps can include picking up the items, i.e. gripping the vessels and transferring them to another position, or aspirating the liquids contained in the vessels, or parts thereof, or dispensing liquids or solids into the vessel, either containing a liquid or not containing a liquid. Those following handling steps may require that the paths of the respective transfer heads are different in length, as the final destinations of the items to be transferred may have a different distance from the position where the items were provided to.

In another embodiment the method includes dispensing a first liquid into said first vessel using a pipette tip on said first transfer head and a second liquid into said second vessel using a pipette tip on said second transfer head. This can be followed by a step comprising transferring said first vessel to a first position on the working area of said first transfer head and said second vessel to a second position on the working area of said second transfer head. Alternatively, a step comprising aspirating by said first transfer head a first liquid from said first vessel and transferring it to a position on the working area of said first transfer head and aspirating by said second transfer head a second liquid from said second vessel and transferring it to a second position on the working area of said second transfer head can be added.

In still another embodiment the method includes aspirating a first liquid from said first vessel using a pipette tip of said first transfer head and a second liquid from said second vessel using a pipette tip of said second transfer head. This can be followed by a step comprising transferring said first liquid to a first position on the working area of said first transfer head and said second liquid to a second position on the working area of said second transfer head. Alternatively, a step can follow comprising dispensing a first liquid into said first vessel using said first transfer head and a said second liquid into said second vessel using said second transfer head.

In a preferred embodiment the first transfer head of the first transfer arm pipettes a first liquid in a first and a second vessel using a pipette tip of said first transfer arm and provides said first and a second vessel to the working area of said second transfer arm. Each of said first and second transfer head of said second transfer arm transfer said first and second vessel to another position for pipetting another liquid using a pipette tip of said first and second transfer head each.

### Reference numerals list

- 1: Apparatus
- 10: First working area (sample input area)
- 20: Second working area (sample preparation area)
- 30: Third working area (amplification and detection area)
- 40: Transfer module
- 41: Rail for movement in X direction
- 42: First transfer arm
- 43: Rail for movement in Y direction
- 44: First transfer head
- 45: Second transfer head
- 46: Second transfer arm
- 47: Transfer head

## Claims

1. An instrument for handling liquids comprising a first and a second transfer arm mounted on the instrument, said first and second transfer arms bearing at least one transfer head,
**characterized in that** at least one of said first and second transfer arms comprises at least two transfer heads the first of said transfer heads being mounted on said instrument to be moved on a first path in a first horizontal direction and the second transfer head to be moved independently, but in coordinated manner on a second path in a second horizontal direction.

2. An instrument according to claim 1 **characterized in that** the first of said transfer heads being mounted on said instrument to be moved on a first path in a first vertical direction and the second transfer head to be moved independently, but in coordinated manner on a second path in a second vertical direction.

3. An instrument according to any of claim 1 and 2 **characterized in that** the first of said transfer heads being mounted on said instrument to be moved on a first path in a first horizontal and vertical direction and the second transfer head to be moved independently, but in coordinated manner on a second path in a second horizontal and vertical direction

4. An instrument according to claim 1 to 3 **characterized in that** at least one of said heads comprises at least one pipetting unit.

5. An instrument according to any of claims 1 to 4, **characterized in that** at least one of said heads comprises at least one gripper unit.

6. An instrument according to any of claims 1 to 5, **characterized in that** each of said heads comprises at least one pipetting unit.

7. An instrument according to any of claims 1 to 6, **characterized in that** each of said heads comprises at least one gripper unit.

8. An instrument according to any of claims 1 to 7, **characterized in that** each of said heads comprise at least one pipetting unit and at least two gripper units.

9. An instrument according to any of claims 1 to 8, **characterized in that** the functions of said heads are the same.

10. An instrument according to any of claims 1 to 9, **characterized in that** said heads act in parallel.

11. An instrument according to any of claims 1 to 10, **characterized in that** the working areas of said first and second transfer arm overlap partially.

12. An instrument according to any of claims 1 to 10, **characterized in that** the working areas of said first and second transfer arm overlap totally

13. An instrument according to any of claims 1 to 12, **characterized in that** the transfer arms are mounted on a common rail defined by said first and second paths.

14. An instrument according to any of claims 1 to 12, **characterized in that** the transfer arms are mounted on different rails defined by said first and second paths.

15. An instrument according to any of claims 1 to 14, **characterized in that** the transfer heads are mounted on a common rail defined by said first and second paths.

16. An instrument according to any of claims 1 to 14, **characterized in that** the transfer heads are mounted on different rails defined by said first and second paths

17. An instrument according to claim 1 to 16, **characterized in that** the path of said first transfer head overlaps the path of said second transfer head in second direction.

18. A method for handling liquid samples using an instrument according to any of claims 1 to 17

19. A method for handling liquids contained in vessels in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- picking up said first vessel containing a first liquid using a gripper of said first transfer head and said second vessel containing a second liquid using a gripper of said second transfer head
- transferring said first vessel to a first position on a first path of said first transfer head and said second vessel to a second position on a second path of said second transfer head.

20. The method of claim 19, **characterized in that** the first and second paths are different in length.

21. A method for handling liquids in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- dispensing a first liquid into said first vessel using a pipettor of said first transfer head and a second liquid into said second vessel using a pipettor of said second transfer head

22. The method of claim 21, further comprising transferring said first vessel to a first position on the working area of said first transfer head and said second vessel to a second position on the working area of said second transfer head.

23. The method of claim 21, further comprising aspirating by said first transfer head a first liquid from said first vessel and transferring it to a position on the working area of said first transfer head and aspirating by said second transfer head a second liquid from said second vessel and transferring it to a second position on the working area of said second transfer head.

24. A method for handling liquids in an instrument comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- aspirating a first liquid from said first vessel using a pipettor of said first transfer head and a second liquid from said second vessel using a pipettor of said second transfer head.

25. The method of claim 24, further comprising transferring said first liquid to a first position on the working area of said first transfer head and said second liquid to a second position on the working area of said second transfer head.

26. The method of claim 25, further comprising
- dispensing a first liquid into said first vessel using said first transfer head and a said second liquid into said second vessel using said second transfer head.

## Amended claims

### Amended claims in accordance with Rule 86(2) EPC.

**1.** An instrument for handling liquids comprising a first and a second transfer arm mounted on the instrument, said first and second transfer arms bearing at least one transfer head,
**characterized in that** at least one of said first and second transfer arms comprises at least two transfer heads the first of said transfer heads being mounted to be moved on said instrument on a first path in a first horizontal direction and the second transfer head to be moved independently, but in a manner coordinated by an algorithm controlling the motions to avoid collisions of the transfer arms and the transfer heads on a second path in a second horizontal direction, and each of said heads comprising at least two sockets for picking up a pipette tip or a vessel and one or more syringe for dispensing reagents or wash liquids.

**2.** An instrument according to claim 1 **characterized in that** the first of said transfer heads being mounted to be moved on said instrument on a first path in a first vertical direction and the second transfer head to be moved independently, but in a manner coordinated by an algorithm controlling the motions to avoid collisions of the transfer arms and the transfer heads on a second path in a second vertical direction.

**3.** An instrument according to any of claim 1 and 2 **characterized in that** the first of said transfer heads being mounted on said instrument to be moved on a first path in a first horizontal and vertical direction and the second transfer head to be moved independently, but in a manner coordinated by an algorithm controlling the motions to avoid collisions of the transfer arms and the transfer heads on a second path in a second horizontal and vertical direction

**4.** An instrument according to any of claims 1 to 3, **characterized in that** the functions of said heads are the same.

**5.** An instrument according to any of claims 1 to 4, **characterized in that** said heads act in parallel.

**6.** An instrument according to any of claims 1 to 5, **characterized in that** the working areas of said first and second transfer arm overlap partially.

**7.** An instrument according to any of claims 1 to 5, **characterized in that** the working areas of said first and second transfer arm overlap totally

**8.** An instrument according to any of claims 1 to 7, **characterized in that** the transfer arms are mounted on a common rail defined by said first and second paths.

**9.** An instrument according to any of claims 1 to 7, **characterized in that** the transfer arms are mounted on different rails defined by said first and second paths.

**10.** An instrument according to any of claims 1 to 9, **characterized in that** the transfer heads are mounted on a common rail defined by said first and second paths.

**11.** An instrument according to any of claims 1 to 9, **characterized in that** the transfer heads are mounted on different rails defined by said first and second paths

**12.** An instrument according to claim 1 to 11, **characterized in that** the path of said first transfer head overlaps the path of said second transfer head in second direction.

**13.** A method for handling liquid samples using an instrument according to any of claims 1 to 12

**14.** A method for handling liquids contained in vessels in an instrument according to any of claims 1 to 12 comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- picking up said first vessel containing a first liquid using a socket for picking up said vessel of said first transfer head and said second vessel containing a second liquid using a socket for picking up said vessel of said second transfer head
- transferring said first vessel to a first position on a first path of said first transfer head and said second vessel to a second position on a second path of said second transfer head.

**15.** The method of claim 14, **characterized in that** the first and second paths are different in length.

**16.** A method for handling liquids in an instrument according to any of claims 1 to 12 comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- dispensing a first liquid into said first vessel using a syringe of said first transfer head and a second liquid into said second vessel using a syringe of said second transfer head

**17.** The method of claim 16, further comprising transferring said first vessel to a first position on the working area of said first transfer head and said second vessel to a second position on the working area of said second transfer head.

**18.** The method of claim 16, further comprising aspirating by said first transfer head a first liquid from said first vessel and transferring it to a position on the working area of said first transfer head and aspirating by said second transfer head a second liquid from said second vessel and transferring it to a second position on the working area of said second transfer head.

**19.** A method for handling liquids in an instrument according to any of claims 1 to 12 comprising
- providing a first vessel by a gripper of said first transfer head on a first transfer arm on a working area common to said first transfer head and a first head on a second transfer arm,
- providing a second vessel by a gripper of said first transfer head on a first transfer arm on a working area common to said first transfer head and a second transfer head on a second transfer arm, and
- aspirating a first liquid from said first vessel using a syringe of said first transfer head and a second liquid from said second vessel using a syringe of said second transfer head.

**20.** The method of claim 19, further comprising transferring said first liquid to a first position on the working area of said first transfer head and said second liquid to a second position on the working area of said second transfer head.

**21.** The method of claim 20, further comprising
- dispensing a first liquid into said first vessel using said first transfer head and a said second liquid into said second vessel using said second transfer head.
